Europäisches Patentamt

European Patent Office

Office européen des brevets

(19)

(11) Veröffentlichungsnummer: **0 166 869**
**A1**

(12) **EUROPÄISCHE PATENTANMELDUNG**

(21) Anmeldenummer: 85103768.9

(22) Anmeldetag: 28.03.85

(51) Int. Cl.⁴: **F 02 B 37/12**

(30) Priorität: 29.05.84 DE 3420015

(43) Veröffentlichungstag der Anmeldung:
08.01.86 Patentblatt 86/2

(84) Benannte Vertragsstaaten:
DE FR GB IT SE

(71) Anmelder: Dr.Ing.h.c. F. Porsche Aktiengesellschaft
Porschestrasse 42
D-7000 Stuttgart 40(DE)

(72) Erfinder: Rutschmann, Erwin, Dipl.-Ing.
Bernsteinstrasse 23
D-7506 Bad Herrenalb 3(DE)

(72) Erfinder: Tran-Van, Khan, Dipl.-Ing.
Tulpenweg 6
D-7251 Weissach(DE)

(72) Erfinder: Wagner, Joachim, Dipl.-Ing. (FH)
Heimstättenstrasse 37
D-7000 Stuttgart 40(DE)

(54) Mehrzylinder-Brennkraftmaschine mit zwei Abgasturboladern.

(57) Die Zylinder einer Brennkraftmaschine sind zu zwei Gruppen zusammengefasst, denen je ein Abgasturbolader zugeordnet ist. Der eine Turbolader ist ständig in Betrieb, der andere wird bei Öffnen eines in seine Abgasleitung eingebauten Zuschaltventils in Betrieb gesetzt, indem durch den sich aufbauenden Ladedruck ein in seine Ladeluftleitung eingesetztes Rückschlagventil geöffnet wird.

Fig.1

EP 0 166 869 A1

0166869

Mehrzylinder-Brennkraftmaschine
mit zwei Abgasturboladern

Die Erfindung betrifft eine Mehrzylinder-Brennkraftmaschine
mit zwei Abgasturboladern nach dem Oberbegriff des Anspruchs 1.

Aus DE-OS 28 18 447 ist ein Aufladesystem einer Brennkraftmaschine mit zwei Abgasturboladern bekannt, deren Turbinen
parallel und deren Verdichter in Reihe geschaltet sind. Da die
Turbinen und Verdichter beider Turbolader unterschiedlich groß
bemessen sind, ist es möglich, bei kleinen Abgasdurchsätzen nur
den kleineren Turbolader zu betreiben und somit eine wirksame
Turboaufladung schon im unteren Drehzahlbereich der Brennkraftmaschine zu erreichen. Durch Zuschalten des größeren Turboladers
bei höherem Abgasdurchsatz wird in erwünschter Weise der Druckverlust in der Abgasanlage abgesenkt und die Drehzahl des
kleinen Turboladers herabgesetzt. Als Nachteil dieses Systems
hat sich der beim Umschalten auftretende Leistungseinbruch erwiesen, der sprunghaft einsetzen kann und die Fahrbarkeit des
mit einer solchen Brennkraftmaschine ausgestatteten Fahrzeuges
herabsetzt.

Es ist die Aufgabe der Erfindung, ein Aufladesystem zu schaffen,
das schon bei niederen Drehzahlen einen spürbaren Drehmoment-
und Leistungszuwachs der Brennkraftmaschine erbringt und über
den ganzen Drehzahlbereich ohne nennenswerten Leistungseinbruch
wirksam ist.

Eine Lösung dieser Aufgabe gelingt mit den kennzeichnenden
Merkmalen des Anspruchs 1. Voraussetzung hierfür ist, daß die
Turbinen und Verdichter in bekannter Weise parallel geschaltet
sind. In bevorzugter Ausführung sind beide Turbolader von
gleicher Bauart und gleich dimensioniert. Wenn die Abgasleitung,

0166869

Y 59

in die die eine Turbine eingebaut ist, durch ein Zuschaltventil gesperrt ist, kommt der gesamte, von der Brennkraftmaschine kommende Abgasstrom der Beaufschlagung der anderen Turbine zugute, so daß sie schon bei niederen Drehzahlen der Brennkraftmaschine soviel Leistung an den von ihr angetriebenen Verdichter abgeben kann, um einen spürbaren Ladedruck in die Zylinder der Brennkraftmaschine einzubringen. Durch diesen Ladedruck wird ein Rückschlagventil in Schließstellung gehalten, das in die Ladeluftleitung des stillgesetzten Turboladers eingebaut ist. Um auch kleinste Kriechströme zu verhindern, wirkt in Schließstellung des Rückschlagventils zusätzlich das Eigengewicht des Ventilkörpers oder eine Feder. Wenn nun das Zuschaltventil voll geöffnet wird, verteilt sich der Abgasstrom etwa gleichmäßig auf beide Turbinen. Der sich dabei in der Ladeluftleitung vor dem Rückschlagventil aufbauende Druck hebt den Ventilkörper von seinem Sitz ab, so daß beide Verdichter Druckluft zu den Zylindern fördern können.

Um beim Zuschalten des zweiten Turboladers einen größeren Leistungseinbruch und Pulsationen zu vermeiden, ist eine besonders angepasste und abgestimmte Steuerung des Rückschlagventils und eines Belüftungsventils vorgesehen, deren Merkmale in Anspruch 6 enthalten sind.

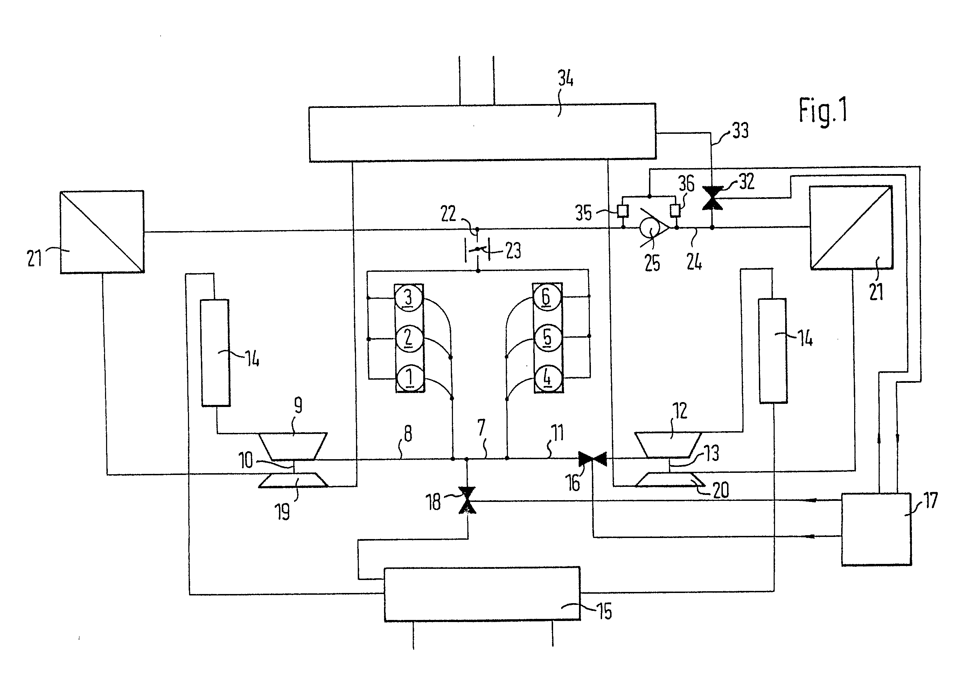

In der Zeichnung ist ein Ausführungsbeispiel der Erfindung dargestellt, das nachfolgend erläutert wird.
Es zeigen
Fig. 1     Blockschaltbild einer Abgasturboladeranlage einer
           Mehrzylinder-Brennkraftmaschine,

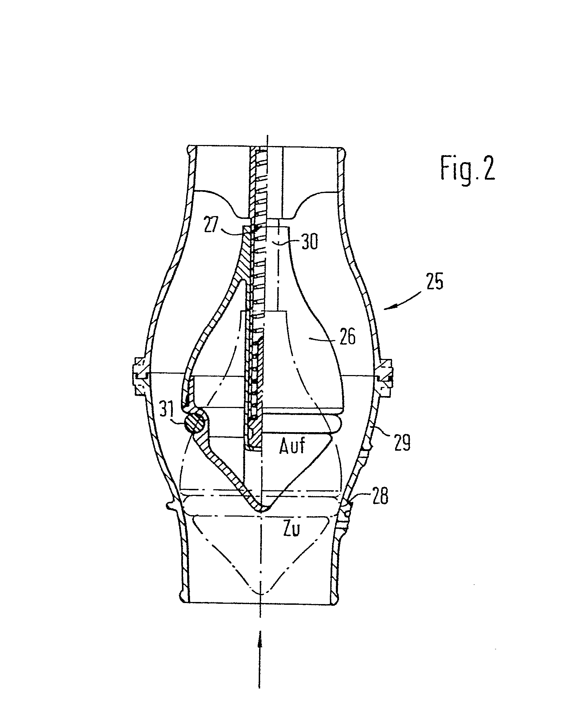

Fig. 2     Rückschlagventil zum Einbau in die Ladeluftleitung.

Eine Mehrzylinder-Brennkraftmaschine besteht aus einer Zylindergruppe mit den Zylindern 1, 2, 3 und einer zweiten, parallel gegenüberliegenden Zylindergruppe mit den Zylindern 4, 5, 6. Die Abgasrohre aus den Zylindern beider Zylindergruppen münden in ein gemeinsames Abgassammelrohr 7, von dem eine Abgasleitung 8 zum Antrieb einer Turbine 9 eines ersten Abgasturboladers 10 und eine weitere Abgasleitung 11 zum Antrieb
einer Turbine 12 eines zweiten Turboladers 13 ausgeht. Beide
Abgasleitungen 8 und 11 sind über Vorschalldämpfer 14 zu einem
gemeinsamen Endschalldämpfer 15 geführt. Vor der Turbine 9 ist
in die Abgasleitung 11 ein Zuschaltventil 16 eingesetzt. Das
Zuschaltventil 16 ist durch ein Steuergerät 17 gesteuert, das
auch ein zwischen dem Abgassammelrohr 7 und Endschalldämpfer
angeordnetes Ventil 18 ansteuert. Die von den Turbinen 9 und 12
angetriebenen Verdichter 19 und 20 fördern Druckluft über
Ladeluftkühler 21 zu einem Sammelsaugrohr 22, in das eine
Drosselklappe 23 eingesetzt ist; vom Sammelsaugrohr 22 aus
verteilt sich die Ladeluft gleichmäßig auf die symmetrisch zu
ihm liegenden Einzelsaugrohre der beiden Zylindergruppen. In
einen vertikalen Teilabschnitt der Ladeluftleitung 24 ist
hinter dem Ladeluftkühler 21 ein Rückschlagventil 25 eingebaut,
dessen stromlinienförmiger Ventilkörper 26 durch Eigengewicht
und die Kraft einer Feder auf einem Sitz 28 des Ventilgehäuses
29 aufliegt. Der Ventilkörper ist an einer Stange 30 geführt,
die im Ventilgehäuse befestigt ist. In Schließstellung liegt
der Ventilkörper 26 mit einem O-Ring 31 am Sitz 28 an.

Wenn im unteren Drehzahlbereich der Brennkraftmaschine das Zuschaltventil 16 geschlossen ist, wird das gesamte Abgas zur
Turbine 9 hin geleitet, die eine entsprechende Leistung an den
von ihr angetriebenen Verdichter 19 abgibt. Der von dem
Verdichter 19 aufgebrachte Ladedruck hält den Ventilkörper 26
des Rückschlagventils geschlossen und verhindert so, daß diese
Ladeluft über den anderen Verdichter 20 ins Freie entweichen
kann. Um den Ladedruck auf ca. 1 bar zu begrenzen und günstige
Voraussetzungen für den Umschaltvorgang zu schaffen, wird bei
einer Drehzahl von ca. 3700/1/min das Zuschaltventil 16 ein
Stück weit geöffnet, so daß ein Teil des Abgases zur Turbine 12
gelangt und der von ihr getriebene Verdichter 20 gegen das
geschlossene Rückschlagventil 25 fördert. Bei weiterer Erhöhung dieses vor dem Rückschlagventil 25 anstehenden Druckes könnte
der Verdichter 12 in den Pumpbereich kommen. Das wird verhindert, indem parallel zum Rückschlagventil 25 eine durch ein
Belüftungsventil 32 gesteuerte Bypassleitung 33 gelegt ist, die
in das Luftfilter 34 mündet. Geschaltet wird das Belüftungsventil 32 durch die Druckdifferenz zweier vor und hinter dem
Rückschlagventil in die Ladeluftleitung eingesetzter Drucksensoren 35, 36. Der Differenzdruck dieser Drucksensoren 35, 36
wird auf das Steuergerät 17 übertragen, von dem das Belüftungsventil 32 angesteuert wird. Solange die Druckdifferenz eine
bestimmte Höhe von z.B. 40 mbar nicht unterschreitet, ist das
Belüftungsventil 32 offen. Wird die Druckdifferenz kleiner, so
schließt das Belüftungsventil 32, so daß der dabei sich einstellende sprunghafte Druckanstieg vor dem Rückschlagventil 25
den Ventilkörper von seinem Sitz abhebt und eine erwünschte
sprunghafte Umschaltung auf Betrieb mit zwei Turboladern
sicherstellt. Ist das Zuschaltventil 16 ganz geöffnet, so
verteilt sich der Abgasstrom auf die beiden Abgasleitungen 8
und 11 und beide Verdichter fördern Druckluft in das Sammelsaugrohr, von dem aus sie sich gleichmäßig auf beide Zylindergruppen verteilt.

P a t e n t a n s p r ü c h e

1. Mehrzylinder-Brennkraftmaschine, deren Zylinder zu zwei Gruppen zusammengefaßt sind, denen jeweils ein aus einer Turbine und einem Verdichter bestehender Abgasturbolader zugeordnet ist, wobei die Verdichter beider Turbolader über gesonderte Ladedruckleitungen an ein gemeinsames Sammelsaugrohr zu beiden Zylindergruppen angeschlossen sind und die Turbinen beider Turbolader in von einer Abgassammelleitung beider Zylindergruppen ausgehende, gesonderte Abgasleitungen eingebaut sind und wobei der eine Turbolader während des Betriebs der Brennkraftmaschine zum anderen Turbolader zuschaltbar ist, dadurch gekennzeichnet, daß in die Abgasleitung (11) der einen Turbine (12) ein in Abhängigkeit von Kenngrößen der Brennkraftmaschine steuerbares Zuschaltventil (16) eingesetzt ist, nach dessen Öffnen ein in die Ladeluftleitung (24) des von der Turbine (12) getriebenen Verdichters (20) eingesetztes Rückschlagventil (25) durch den sich in der Ladeluftleitung (24) aufbauenden Druck geöffnet wird.

2. Brennkraftmaschine nach Anspruch 1, dadurch gekennzeichnet, daß der Ventilkörper (26) des Rückschlagventils (25) durch sein Eigengewicht und/oder die Kraft einer Feder (27) auf einem Sitz (28) des Ventilgehäuses (29) aufliegt.

3. Brennkraftmaschine nach Anspruch 2, dadurch gekennzeichnet, daß der Ventilkörper hohl ausgebildet ist, eine stromlininienförmige Kontur aufweist, in einem vertikalen Teilabschnitt der Ladeluftleitung (24) an einer zentrisch in ihr befestigten Stange (30) geführt ist und in Schließstellung mit einem O-Ring (31) an dem Sitz (28) des Ventilgehäuses (29) anliegt.

4. Brennkraftmaschine nach Anspruch 1, dadurch gekennzeichnet, daß das Zuschaltventil (16) abhängig von der Stellung der Drosselklappe (23) und von der Drehzahl der Brennkraftmaschine mit einem elektronischen Steuergerät (17) steuerbar ist.

5. Brennkraftmaschine nach Anspruch 4, dadurch gekennzeichnet, daß das Zuschaltventil (16) ab einer Drehzahl von ca. 4500/1/min. voll geöffnet ist.

6. Brennkraftmaschine nach Anspruch 1, dadurch gekennzeichnet, daß der Differenzdruck am Rückschlagventil (25) durch Drucksensoren erfasst wird, die ein im Bypass zum Rückschlagventil (25) liegendes Belüftungsventil (32) über ein Steuergerät (17) so ansteuern, daß es bei einem vorgebbaren Differenzdruck schlagartig schließt, wodurch der volle Ladedruck zum Öffnen des Rückschlagventils (25) zur Verfügung steht.

Fig.1

Y59₂
0166869

Fig.2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A-2 015 644 (KÜHNLE)<br>* Seite 3, Zeilen 8-84; Figur 1 * | 1 | F 02 B 37/12 |
| A | | 6 | |
| | --- | | |
| X | DE-C- 850 965 (BBC)<br>* Seite 2, Zeile 84 - Seite 3, Zeile 10; Figur 1 * | 1 | |
| | --- | | |
| X | CH-A- 248 603 (BBC)<br>* Seite 1, Zeile 54 - Seite 2, Zeile 60; Figur 1 * | 1 | |
| | --- | | |
| A | US-A-2 809 660 (BECKER)<br>* Spalte 1, Zeile 46 - Spalte 2, Zeile 70; Figur 1 * | 2,3 | RECHERCHIERTE SACHGEBIETE (Int. Cl 4) |
| | --- | | |
| A | FR-A-1 557 750 (R. PONS)<br>* Seite 2, Absatz 17; Seite 3, Absatz 6; Seite 4, Absatz 3; Figuren 1-3 * | 2,3 | F 02 B<br>F 02 D<br>F 16 K |
| | --- | | |
| A | FR-A-2 039 459 (SOGREAH)<br>* Seite 2, Zeile 10 - Seite 3, Zeile 28; Figuren 1-3 * | 2,3 | |
| | --- | | |
| A | US-A-4 249 382 (EVANS)<br>* Spalte 3, Zeilen 59-68; Spalte 4, Zeile 63 - Spalte 5, Zeile 44; Figur 3 * | 1,4 | |
| | ----- | | |

Der vorliegende Recherchenbericht wurde für alle Patentansprüche erstellt.

| Recherchenort<br>DEN HAAG | Abschlußdatum der Recherche<br>05-09-1985 | Prüfer<br>HAKHVERDI M. |
|---|---|---|